# EUROPEAN PATENT SPECIFICATION

(11) **EP 0 429 391 B1**
(45) Date of publication and mention of the grant of the patent: **23.08.1995**
(21) Application number: 90810275.9
(22) Date of filing: 05.04.1990
(51) Int. Cl.: G06K 11/18

(54) **Three-dimensional computer input device**
Dreidimensionales Rechnereingabegerät
Dispositif pour l'entrée de données à trois dimensions dans l'ordinateur

(30) Priority: 06.11.1989 IL 92220
(43) Date of publication of application: 29.05.1991
(73) Proprietor: International Business Machines Corporation, Armonk, N.Y. 10504 (US)
(72) Inventor: Medan, Yoav, Dr., Boca Raton, Florida 33433 (US); Shani, Uri, Dr., Upper Nazareth 17940 (IL)
(74) Representative: Barth, Carl Otto

(56) References cited:
- EP-A- 0 312 095
- US-A- 4 787 051
- US-A- 4 839 838
- PATENT ABSTRACTS OF JAPAN, vol. 13, no. 332 (P-905), 26th July 1989;& JP-A-1 096 720 (NEC HOME ELECTRON LTD) 14-04-1989

## Description

This invention relates to a manual computer input device which permits the computer to compute the current space orientation and location of the device. The known two-dimensional manual computer input devices are usually called "*Mouse*", and in analogy it is suggested to call the three-dimensional input device of the present invention a "*Space Mouse*". For convenience, this term will be used throughout the following description.

A typical scenario for the useful employ of the Space Mouse is in any three-dimensional computer graphics applications like CAD-CAM (Computer Aided Design - Computer Aided Manufacturing) where the interactive, i.e., on-line manipulation of three-dimensional objects by the computer under control via keyboard and screen is most important. This task is very difficult to do with the common two-dimensional input devices (mouse, joystick or tablet), let alone the multiple one-dimensional input via dials and pad.

In contrast, the hand-held Space Mouse of the invention will replace the conventional two-dimensional mouse in giving direct "virtual" control over the three-dimensional graphic objects on the screen. The physical feel at hand will be complemented by the visual feedback from the graphically manipulated screen images.

Many other applications from a large variety of fields can benefit from the Space Mouse, clearly those requiring multiple parameters, as in navigation, simulation of motion, graphical animation, music entry, or even plain conventional two-dimensional computer graphics. The Space Mouse could replace a two-dimensional pointing device by controlling a screen cursor which corresponds to the "tip" of an imaginary "wand" touching the screen.

The conventional mouse typically positions the cursor on the screen of a computer display unit by transmitting the movements of a direction sensing device in encoded form to the computer. Usually, the direction sensing device comprises a ball arranged on the bottom side of the mouse and interacting with a frictional pad on which the mouse is movable in any direction. No transmission occurs while the mouse is motionless. Some implementations of the mouse have a switch for the transmission of a zero incremental movement report when the mouse is motionless.

The encoding of the movements is performed in x- and y-increments which cause the cursor to follow a generally staircase-shaped track if the mouse follows an oblique path, and which becomes, of course, a straight line for movements in exact x- or y-directions. The resolution of the encoding is usually performed with a sampling rate of 100 reports per second and four counts per millimeter, so that the stairs in an oblique line are hardly visible.

A three-dimensional spatial input apparatus including a series of coplanar, single axis accelerometers configured to provide information on translation along and rotation around a set of orthogonal axes is known from the United States patent US-A-4 839 838. A preprocessing computer determines the acceleration values output by the accelerometers and converts these values into a series of acceleration, velocity, and position values in relation to the axis system with corrections based on a change in the influence of gravity. A hand-held inertial mouse providing input data to a computer from which the computer can determine the translational and angular displacement of the mouse is known from US-A-4 787 051 Pairs of accelerometers are positioned to detect acceleration along each axis of a cartesian coordinate system such that an angular acceleration of the mouse about any axis of rotation causes representative differences in the magnitudes of the output signals of one or more of these accelerometer pairs.

In both known devices, information on the rotational movement of the mouse is gained by a double integration process. This process magnifies any errors or offsets generated by the accelerometers and their circuitry.

The features of the Space Mouse of this invention are set forth in the appended claim 1.

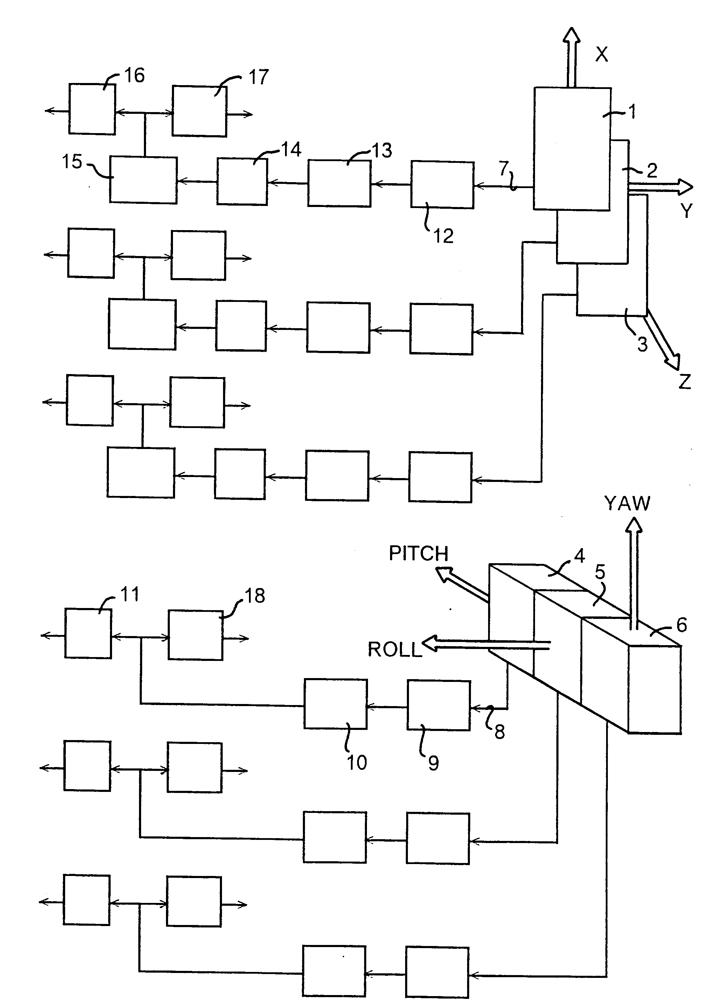

Details of the invention will hereafter be described by way of example and with reference to the drawing in which a schematic configuration of a Space Mouse in accordance with the invention is shown.

The preferred embodiment of the Space Mouse in accordance with the invention is implemented with mechanical gadgets comprising a triplet of acceleration sensors 1, 2 and 3, respectively associated with the usual Cartesian coordinates X, Y and Z, and a triplet of gyroscopes, namely a P-gyroscope 4 associated with the pitch axis of the Space Mouse, an R-gyroscope 5 associated with its roll axis, and a Y-gyroscope 6 associated with the yaw axis of the Space Mouse. The rotational axes are, of course, mutually orthogonal in space, and their respective home positions are not tied to the origin or orientation of the rectangular coordinates X, Y and Z.

The acceleration sensors 1, 2 and 3 are provided to detect displacements of the Space Mouse along the directions with which they are associated. These displacements are converted to analog signals which are made available at individual output terminals, such as the output terminal 7 associated with X-acceleration sensor 1.

A gyroscope typically comprises a heavy symmetrical disk free to rotate about an axis which itself is confined within a framework such that it is free to assume any orientation in space. If the disk is set spinning, the direction of its axis of rotation will remain fixed in space no matter what motion the outer framework undergoes. Gyroscopes have a long history of use for providing fixed reference directions for such instruments as the gyrocompass used on ships and similar orientation indicators used in aircraft.

The gyroscopes 4, 5 and 6 provide space-orientation clues in the form of analog (voltage) signals at Individual output terminals, such as output terminal 8 associated with the roll axis of the Space Mouse. These signals permit the determination of the absolute orientation of a controlled graphical object on whose periphery the Space Mouse is moved, for example, with respect to its pitch, roll and yaw axes.

A software interface is preferably provided to resolve problems resulting from any instability and inaccuracy of displacement sensors 1, 2 and 3 and of gyroscopes 4, 5 and 6. This software interface is not, however, a subject of the present invention.

There is a difference in processing the output signals from the acceleration sensors 1, 2 and 3 as compared to the output signals from the gyroscopes 4, 5 and 6. The output signals from gyroscopes 4, 5 and 6 on their respective terminals, such as on terminal 8 for R-gyroscope 5, are supplied to an analog-to-digital converter 9 which converts the voltage to a digital representation corresponding to the rate of rotation of the Space Mouse around the corresponding sensitive axis.

To curb small fluctuations on the value of this function, a smoothing module 10 is provided which essentially consists of a known hysteresis filter (as described by R.O. Duda and P.E. Hart in "Pattern Classification and Scene Analysis", Wiley International, 1973, pp. 354ff.). The output signal of smoothing module 10 is fed into a digital differential analyzer 11 which accumulates a value corresponding to the angle Θ of rotation around the corresponding gyroscope axis.

The acceleration sensors 1, 2 and 3 provide voltage signals proportional to the acceleration applied to the Space Mouse as it is propelled in space. These voltage signals at output terminal 7 are supplied to an analog-to-digital converter 12 the output of which is connected to a smoothing module 13. The signal at the output of smoothing module 13 is a measure for the acceleration imparted on the Space Mouse. That signal is further fed to a first digital differential analyzer 14 whose output signal is related to the velocity of the Space Mouse along the respective direction. The result is then passed through a "friction module" 15 which reduces this value to zero as a function of time, and to a second digital differential analyzer 16 from whose output signal the displacement value can be computed.

While the description has been confined to explanations concerning the X-acceleration detector 1 and its associated circuitry 7, and 12...17, and to the R-gyroscope 5 and its associated circuitry 8...11 and 18, it will be clear to those skilled in the art that what was said with respect to X-acceleration detector 1 and R-gyroscope 5 is likewise applicable to the other two acceleration detectors 2 and 3, and to the other two gyroscopes 4 and 6, respectively.

In case it is desirable to connect the Space Mouse via the dials pad of a graphics unit, the output signals from which the rotational and displacement values are computed may not be taken from said digital differential analyzers 11 and 16, but from pulse generators 17 and 18, respectively. These pulse generators will interrupt the controller of the graphics unit at the rate of change of those values. This rate is controllable by the application parameters for sensitivity built into the software support for the Space Mouse. An example for such an interrupt-driven controller is the one of the IBM 5080 Graphics System.

The physical arrangement of the acceleration detectors 1...3, the gyroscopes 4...6, and their associated electronic circuitry may be such that, for example, the detectors and gyroscopes 1...6 together with the electronics 7...18 are located within a single hand-held housing connected via cable to the computer input ports.

Alternatively, the electronics 7...18, or at least part of it, may be housed within the computer casing so that the hand-held Space Mouse contains only the said acceleration detectors and gyroscopes. The latter arrangement has the advantage of requiring only simple cabling in view of the fact that the output signals of the accelerators 1...3 as well as of the gyroscopes 4...6 are analog voltages, whereas in the case where the electronics are integrated within the hand-held housing, the cabling will have to be adapted to handle digital data.

A scaled-down version of the six-axes Space Mouse described above is a three-axes Space Mouse which would include only the object-orientation detection components, viz. the gyroscopes 4,5 and 6. Naturally, the exclusion of the acceleration sensors 1,2 and 3 will reduce the complexity of the Space Mouse yet retain what might be considered the more important and meaningful feature of three-dimensional orientation.

Another embodiment of the Space Mouse can consist of a pair of acceleration sensors 1 and 2 associated, respectively, with only the X- and Y-directions of the coordinate system, for example, and combined with a triplet of gyroscopes 4,5 and 6.

Another intermediate variation of the Space Mouse is the combination of the object-orientation detection components, i.e. the gyroscopes 4,5 and 6 with a conventional two-dimensional mouse as ordinarily used for graphics stations. Thus, the digital representations of a three-dimensional space orientation plus a two-dimensional surface location can be read into the computer by manipulating a single hand-held device.

For all versions of the Space Mouse described above, providing a "zoom" button on the Space Mouse will improve the control on the object being treated.

## Claims

1. Three-dimensional computer input device comprising means (4...6) for detecting changes of space orientation about three rotational axes (Pitch, Roll, Yaw) and circuit means (8...11, 18) for converting output signals of said detecting means (4...6) to a form appropriate for an associated computer to compute space orientation data, ***characterized*** in that said detecting means comprises a triplet of gyroscopes (4...6), respectively associated with said rotational axes (Pitch, Roll, Yaw), each gyroscope generating a said output signal corresponding to the rate of rotation of said input device about one of said rotational axes, and in that each gyroscope is connected to said circuit means which comprises electronic circuitry (8...11, 18) connected to appropriate input ports of said associated computer.

2. Computer input device in accordance with claim 1, ***characterized*** in that the device further comprises at least a pair of acceleration detectors (1...3) for detecting movement along the axes (X, Y, Z) of an at least two-dimensional coordinate system, and in that each acceleration detector is connected to electronic circuitry (7, 12...17) which is connected to appropriate connected to electronic circuitry (7, 12...17) which is conneted to appropriate input ports of said associated computer.

3. Computer input device in accordance with claim 1, ***characterized*** in that said device further comprises a conventional ball-controlled two-dimensional motion detector connected to electronic circuitry (7, 12...17), which is connected to appropriate input ports of said associated computer.

4. Computer input device in accordance with claim 2 or claim 3, ***characterized*** in that the output terminal (7) of each of said acceleration detectors (1...3) is connected to a chain of electronic circuits comprising an analog-to-digital converter (12), a smoothing module (13), a first digital differential analyzer (14), a "friction" module (15), and a second digital differential analyzer (16), the output terminal of the latter being connected to an input port of the associated computer.

5. Computer input device in accordance with claim 1, ***characterized*** in that the output terminal (8) of each of said gyroscopes (4...6) is connected to a chain of electronic circuits comprising an analog-to-digital converter (9), a smoothing module (10), and a digital differential analyzer (11), the output terminal of the latter being connected to an input port of the associated computer.

6. Computer input device in accordance with claim 4 or claim 5, ***characterized*** in that said acceleration detectors (1...3) and said gyroscopes (4...6) as well as at least part of said chain of electronic circuits (7, 12...17; 8...11, 18) are located within a common hand-held housing of said input device.

7. Computer input device in accordance with claim 4, ***characterized*** in that said second digital differential analyzer (16) is replaced by a pulse generator (17) to permit the connection of the input device to the associated computer through the dials pad of an interrupt-driven graphics controller.

8. Computer input device in accordance with claim 5, ***characterized*** in that said digital differential analyzer (11) is replaced by a pulse generator (18) to permit the connection of the input device to the associated computer through the dials pad of an interrupt-driven graphics controller.

9. Computer input device in accordance with claim 3, ***characterized*** in that said conventional ball-controlled two-dimensional motion detector and its associated electronic circuitry (7, 12...17), as well as said triplet of gyroscopes (4...6) together with their associated electronic circuitry (8...11, 18) are arranged in a common housing.

## Patentansprüche

1. Dreidimensionales Rechnereingabegerät, enthaltend Mittel (4...6) zum Erfassen von Veränderungen der räumlichen Orientierung um drei Rotationsachsen (Stampfen, Schlingern, Gieren), und Schaltungsmittel (8...11, 18) zum Umwandeln von Ausgangssignalen der Erfassungsmittel (4...6) in eine Form, die für einen zugeordneten Rechner geeignet ist, Raumorientierungsdaten zu berechnen, dadurch gekennzeichnet, daß diese Erfassungsmittel ein Gyroskoptripel (4...6) beinhalten, die entsprechend den Rotationsachsen (Stampfen, Schlingern, Gieren) zugeordnet sind, wobei jedes Gyroskop die Ausgangssignale entsprechend der Rotationsgeschwindigkeit des Eingabegeräts um eine der drei Drehachsen generiert, und daß jedes Gyroskop an das Schaltungsmittel angeschlossen ist, das elektronische Schaltungen (8...11, 18) umfaßt, die an geeignete Eingangsports des zugeordneten Rechners angeschlossen sind.

2. Rechnereingabegerät gemäß Anspruch 1, dadurch gekennzeichnet, daß das Gerät ferner wenigstens ein Paar Beschleunigungsdetektoren (1...3) zum Erfassen von Bewegungen entlang den Achsen (X, Y, Z) eines wenigstens zweidimensionalen Koordinatensystems umfaßt, und daß jeder Beschleunigungsdetektor an eine der elektronischen Schaltungen (7, 12...17) angeschlossen ist, die mit geeigneten Eingangsports des zugeordneten Rechners verbunden sind.

3. Rechnereingabegerät gemäß Anspruch 1, dadurch gekennzeichnet, daß das Gerät ferner eine herkömmliche, kugelgesteuerte, zweidimensionale, an elektronische Schaltkreise (7, 12...17) angeschlossene Bewegungserfassungsvorrichtung enthält, die mit geeigneten Eingangsports des zugeordneten Rechners verbunden ist.

4. Rechnereingabegerät gemäß Anspruch 2 oder Anspruch 3, dadurch gekennzeichnet, daß die Ausgangsklemme (7) jedes dieser Beschleunigungsdetektoren (1...3) an eine Kette elektronischer Schaltkreise angeschlossen ist, die einen Analog/Digital-Wandler (12), ein Glättmodul (13), einen ersten digitalen Differentialanalysator (14), ein "Reibungs"-Modul (15) und einen zweiten digitalen Differentialanalysator (16) umfassen, wobei die Ausgangsklemme dieses letzteren an einen Eingangsport des zugeordneten Rechners angeschlossen ist.

5. Rechnereingabegerät gemäß Anspruch 1, dadurch gekennzeichnet, daß die Ausgangsklemme (8) jedes dieser Gyroskope (4...6) an eine Kette elektronischer Schaltkreise angeschlossen ist, die einen Analog/Digital-Wandler (9), ein Glättmodul (10), und einen digitalen Differentialanalysator (11), umfassen, wobei die Ausgangsklemme dieses letzteren an einen Eingangsport des zugeordneten Rechners angeschlossen ist.

6. Rechnereingabegerät gemäß Anspruch 4 oder Anspruch 5, dadurch gekennzeichnet, daß die Beschleunigungsdetektoren (1...3) und die Gyroskope (4...6) sowie wenigstens ein Teil der Kette der elektronischen Schaltkreise (7, 12...17; 8...11, 18) innerhalb eines gewöhnlichen, handggehaltenen Gehäuses des Eingabegeräts untergebracht sind.

7. Rechnereingabegerät gemäß Anspruch 4, dadurch gekennzeichnet, daß der zweite digitale Differentialanalysator (16) durch einen Impulsgenerator (17) ersetzt wird, um den Anschluß des Eingabegeräts an den zugeordneten Rechner durch den Wählpad eines Interrupt-getriebenen Controllers zu ermöglichen.

8. Rechnereingabegerät gemäß Anspruch 5, dadurch gekennzeichnet, daß der digitale Differentialanalysator (11) durch einen Impulsgenerator (18) ersetzt wird, um den Anschluß des Eingabegeräts an den zugeordneten Rechner durch den Wählpad eines Interrupt-getriebenen Grafik-Controllers zu ermöglichen.

9. Rechnereingabegerät gemäß Anspruch 1, dadurch gekennzeichnet, daß der herkömmliche, kugelgesteuerte, zweidimensionale, Bewegungserfassungsdetektor und seine zugeordneten elektronischen Schaltkreise (7, 12...17) sowie das Gyroskoptripel (4...6) zusammen mit seinen zugeordneten elektronischen Schaltkreisen (8...11, 18) in einem gemeinsamen Gehäuse untergebracht sind.

## Revendications

1. Périphérique d'entrée informatique tridimensionnel comprenant un élément (4...6) pour détecter des changements d'orientation dans l'espace autour de trois axes de rotation (Tangage, Roulis, Lacet) et un ensemble de circuits (8...11, 18) pour convertir les signaux de sortie du dit élément de détection (4...6) en une forme adéquate pour permettre à l'ordinateur associé de calculer des données d'orientation dans l'espace, ***caractérisé*** en ce que ledit élément de détection comprend un triplet de gyroscopes (4...6) associés respectivement aux dits axes de rotation (Tangage, Roulis, Lacet), chacun des dits gyroscopes générant un signal de sortie correspondant à la vitesse de rotation du dit périphérique d'entrée autour de l'un des dits axes de rotation, et en ce que chacun des dits gyroscopes est connecté au dit ensemble de circuits qui comprend une circuiterie électronique (8...11, 18) reliée aux ports d'entrée appropriés du dit ordinateur associé.

2. Périphérique d'entrée informatique selon la revendication 1, ***caractérisé*** en ce que ledit périphérique comprend, de plus, au moins une paire de détecteurs d'accélération (1...3) pour détecter les mouvements le long des axes (X, Y, Z) d'un système de coordonnées au moins bidimensionnel, et en ce que chaque détecteur d'accélération est connecté à une circuiterie électronique (7, 12...17) elle-même reliée aux ports d'entrée appropriés du dit ordinateur associé.

3. Périphérique d'entrée informatique selon la revendication 1, ***caractérisé*** en ce que ledit périphérique comprend, de plus, un détecteur de mouvements bidimensionnel classique commandé par bille connecté à une circuiterie électronique (7, 12...17) elle-même reliée aux ports d'entrée approprié du dit ordinateur associé.

4. Périphérique d'entrée informatique selon la revendication 2 ou 3, ***caractérisé*** en ce que la borne de sortie (7) de chacun des dits détecteurs d'accélération (1...3) est connectée à une chaîne de circuits électroniques comprenant un convertisseur analogique/numérique (12), un module de lissage (13), un premier analyseur différentiel numérique (14), un module "de frottement" (15) et un deuxième analyseur différentiel numérique (16), la borne de sortie de ce dernier étant connectée au port d'entrée de l'ordinateur associé.

5. Périphérique d'entrée informatique selon la revendication 1, ***caractérisé*** en ce que la borne de sortie (8) de chacun des dits gyroscopes (4...6) est connectée à une chaîne de circuits électroniques comprenant un convertisseur analogique/numérique (9), un module de lissage (10) et un analyseur différentiel numérique (11), la borne de sortie de ce dernier étant connectée à un port d'entrée de l'ordinateur associé.

6. Périphérique d'entrée informatique selon la revendication 4 ou 5, ***caractérisé*** en ce que les dits détecteurs d'accélération (1...3) et les dits gyroscopes (4...6), ainsi qu'au moins une partie de ladite chaîne de circuits électroniques (7, 12...17; 8...11, 18) sont situés dans un boîtier portatif commun du dit périphérique d'entrée.

7. Périphérique d'entrée informatique selon la revendication 4, ***caractérisé*** en ce que ledit deuxième analyseur différentiel numérique (16) est remplacé par un générateur d'impulsions (17) pour permettre la connexion du périphérique d'entrée à l'ordinateur associé via le bloc de cadrans d'un contrôleur graphique commandé par interruptions.

8. Périphérique d'entrée informatique selon la revendication 5, ***caractérisé*** en ce que ledit analyseur différentiel numérique (11) est remplacé par un générateur d'impulsions (18) pour permettre la connexion du périphérique d'entrée à l'ordinateur associé via le bloc de cadrans d'un contrôleur graphique commandé par interruptions.

9. Périphérique d'entrée informatique selon la revendication 3, ***caractérisé*** en ce que ledit détecteur de mouvements bidimensionnel classique commandé par bille et sa circuiterie électronique associée (7, 12...17), ainsi que ledit triplet de gyroscopes (4...6) et leur circuiterie électronique associée (8...11, 18), sont disposés dans un boîtier commun.
